(19)

Europäisches Patentamt
European Patent Office
Office européen des brevets

(11) **EP 2 348 066 A2**

(12) **EUROPEAN PATENT APPLICATION**

(43) Date of publication:
  **27.07.2011 Bulletin 2011/30**

(51) Int Cl.:
  *C08J 9/12* *(2006.01)*   *B29C 44/34* *(2006.01)*
  *B29C 44/30* *(2006.01)*

(21) Application number: **10185732.4**

(22) Date of filing: **12.05.2003**

(84) Designated Contracting States:
  **AT BE BG CH CY CZ DE DK EE ES FI FR GB GR HU IE IT LI LU MC NL PT RO SE SI SK TR**

(30) Priority: **31.05.2002  US 160817**

(62) Document number(s) of the earlier application(s) in accordance with Art. 76 EPC:
  **03728805.7 / 1 511 795**

(71) Applicant: **Owens Corning Intellectual Capital, LLC**
  **Toledo OH 43659 (US)**

(72) Inventors:
  • **Miller, Larry, M.**
    **Suffield,, OH 44260 (US)**

  • **Breindel,, Raymond, M.**
    **Hartville, OH 44632 (US)**
  • **Weekley, Mitchell, Z.**
    **Tallmadge, OH 44278 (US)**
  • **Cisar, Thomas, E.**
    **N, Lawrence, OH 44666 (US)**

(74) Representative: **Jacob, Reuben Ellis et al**
  **R.G.C. Jenkins & Co**
  **26 Caxton Street**
  **London**
  **SW1H 0RJ (GB)**

Remarks:
  This application was filed on 01-10-2010 as a divisional application to the application mentioned under INID code 62.

(54) **ANISOTROPIC POLYMER FOAM**

(57)   This invention relates to foam insulating products, particularly to rigid, polymeric foam boards comprising extruded polystyrene foam, with increasing the cell orientation and reducing cell anisotropic ratio, as well as the process method for making the products thereof for improving the insulating properties and for reducing the manufacturing cost of the foam products. Alternatively, foam insulating products having increased cell compressive strength may be made by decreasing the cell orientation and increasing the cell anisotropic ratio.

EP 2 348 066 A2

**Description**

The present invention relates to enhance the thermal insulation value (or to decrease the thermal conductivity) of rigid foamed polymeric boards by reducing cell anisotropic ratio and by increasing the cell orientation ratio, as well as the process methods for the production thereof. More particularly, it relates to rigid extruded polystyrene foam board wherein low cell anisotropic ratio or high cell orientation ratio is reached to increase thermal insulating value of the rigid foamed board.

The usefulness of rigid foamed polymeric boards in a variety of applications is well known. Rigid foamed plastic boards are extensively used as thermal insulating materials for many applications. For instance, polymeric foam boards are widely used as insulating members in building construction. In the past, infrared attenuating agents have been used as fillers in polymeric foam boards to minimize material thermal conductivity $k$ which, in turn, will maximize insulating capability (increase R-value) for a given thickness (U.S. Patent Nos. 5,373,026 and 5,604,265; EP 863,175). The heat transfer $k$ through an insulating material can occur through solid conductivity, gas conductivity, radiation, and convection. The heat transfer $k$, or K-factor, is defined as the the ratio of the heat flow per unit cross-sectional to the temperature drop per unit thickness. In U.S. units, this is defined as:

$$\frac{Btu \cdot in}{Hr \cdot Ft^2 \cdot {}^\circ F}$$

And the metric unit:

$$\frac{W}{m\,k}$$

In most polymeric foams of conventional cell size, that is 0.1 to 1.5 millimeters, the reduction of thermal conductivity $k$ has been observed with decreasing the average cell size. This phenomenon is documented in "The Thermal Conductivity of foamed Plastics," Chemical Engineering Progress, Vol. 57, No. 10, pp. 55-59, authored by Richard E. Skochdopol of The Dow Chemical Co., and "Prediction of the Radiation Term in the Thermal Conductivity of Crosslinked Closed Cell Polyolefin Foams," J. of Polymer Science: Part B: Polymer Physics, V 38, pp. 993-1004 (2000), by O.A. Almanza et al. of Universidad de Valladolid, which are herein incorporated by reference.

It is highly desirable to improve the thermal conductivity $k$ without adding additives, or increasing the density and/or the thickness of foam product. Particulary, the architectural community desires a foam board having a thermal resistance value R equal to 10, with a thickness of less than 1.75 inches (44.45 millimeters), for cavity wall construction, to keep at least 1 inch (25.4 millimeters) of the cavity air gap clean. The total Thermal resistance R, also known as the R-value, is the ratio of thickness $t$ of the board to thermal conductivity $k$.

It is also highly desirable to produce the above rigid polymer foam having retained or improved compressive strength, thermal dimensional stability, fire resistance, and water absorption properties.

It is also highly desirable to provide the above rigid polymer foam with infrared attenuating agents and other process additives, such as nucleating agent, fire retardant, gas barrier, which has overall compound effects on foam properties including improved thermal conductivity (decreased k-factor), and improved insulating value (increased R-value) for a given thickness and density.

It is also highly desirable to provide the above rigid polymer foam with variety of blowing agents to enhance the thermal insulation R-value. These blowing agents include partially or fully hydrogenated chloroflourocarbons (HCFC's), hydroflourocarbons (HFC's), hydrocarbons (HC's), water, carbon dioxide, and other inert gases.

It is also highly desirable to provide the process methods and foaming facility modification to control the cell morphology: reduce the cell anisotropic and increase cell orientation during foaming process, for use in the production of a rigid polymer foam.

It is also highly desirable to lower the cost of a polymeric foam product in a simple and economical manner.

The present invention, in one preferred embodiment, relates to foam insulating products, such as extruded polystyrene foam, with low cell anisotropic ratio or higher cell orientation in the x/z direction to enhance the thermal insulation, and to retain other properties as well. The higher cell orientation can be achieved easily through process and die/shaper modification. The low anisotropic or higher cell orientation ratio polystyrene foams of the present invention decrease both the initial and the aged thermal conductivity, or inversely, increase the thermal resistance ("R value") as compared with substantially round cells.

In another preferred embodiment of the present invention, polymeric foams with a lower cell orientation ratio in the x/z direction and higher anistropic ratio can be achieved easily through process and die/shaper modification. Cells made in this way have improved compressive properties with only slight reductions in thermal conductivity and insulation R-values as compared with round cells.

The foregoing and other advantages of the invention will become apparent from the following disclosure in which one or more preferred embodiments of the invention are described in detail and illustrated in the accompanying drawings

Fig. 1 illustrates a rigid, low-density foam made according to the prior art;
Fig. 2 illustrates a rigid, low-density foam made according to one preferred embodiment of the present invention;
Fig. 3 illustrates a rigid, low-density foam made according to another preferred embodiment of the present invention;
Fig. 4 is a graphical illustration from 52 trials showing the thermal insulation R-value vs. cell orientation ratio (x/z) of rigid foam board with several density levels, over a period of 180 days, HCFC 142 b blowing agent, 10.5 to 11.5 weight percentage of total solid was used;
Fig. 5 is a graph, showing test results from 39 trials, related to R-value vs. cell orientation of polystyrene foam boards with several density levels, over a period of 180 days, HFC134a 5.5 wt% and ethanol 3 wf% were used as blowing agent for foaming these boards; and
Fig. 6 is a graph, showing test results from 32 trials, related to R-value vs. the cell orientation ratio of polystyrene foam boards with several density levels, over a period of 40 days at equilibrium of gas diffusion, carbon dioxide 3.68 wt% and ethanol 1.4 wt% were used as blowing agent.

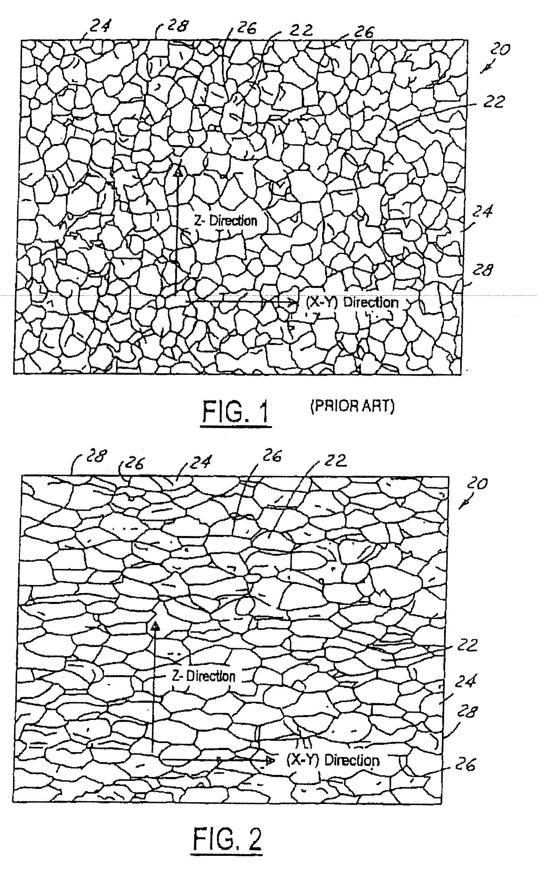

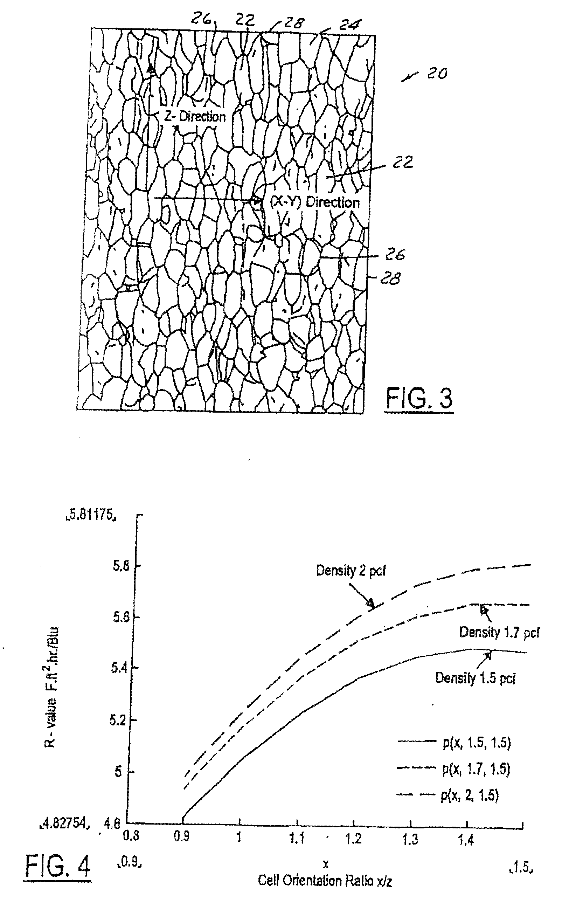

The present invention relates to foam insulating products, such as extruded or expanded polystyrene foam, that are extensively used as thermal insulating materials for many applications. For instance, polymeric foam boards are widely used as insulating members in building construction. Fig. 1 illustrates a cross-sectional view of the rigid foam materials 20 made according to the prior art, while Fig. 2 illustrates the foam cells having enhanced thermal insulation values made in accordance with a preferred embodiment of the present invention. Fig. 3 illustrates another rigid foam material 20 made in accordance with a preferred embodiment of the present invention having improved compression strength.

Referring to Fig. 1, a rigid foam plastic material 20, typically a foam board, made according to the prior art is shown as having a plurality of interior open cells 22 and exterior open cells 24. Each interior open cell 22 is separated from the next corresponding interior open cell 22 and/or exterior open cell 24 by a cell strut 26, that is each open cell 22 shares a cell strut 26 with the next respective open cell 22. Similarly, each exterior open cell 24 is separated from the next corresponding exterior open cell 24 by a cell strut 26. Further, each exterior open cell 24 is separated from the outer environment surrounding the rigid foam plastic materials 20 by a cell wall 28. The thickness of the cell wall 28 is less than the thickness of a cell strut 26. The cells 22, 24 are substantially round in shape and have an average cell size of approximately 0.1 to 1.5 millimeters in diameter. As the cells 22, 24 are substantially round, the x/z cell orientation ratio is approximately 1.0. The cell orientation ratio is simply a ratio of the cell size in the direction desired. For example, the cell orientation in the machine direction (or extruded direction) is defined as x/z cell orientation ratio and in the cross machine direction as y/z cell orientation ratio.

Further, the cell anisotropic ratio of substantially round cells as in the Fig. 1 is also approximately 1.0. Here, the cell anisotropic ratio a is determined as:

$$a = z/(x\ y\ z)^{1/3}$$

or, for easy calculation:

$$a = 10^{\ \lg z - 1/3\ (\lg x.y.z)}$$

where x is the cell 22, 24 size of the foamed plastic material 20 in extruded direction; y is the cell 22, 24 size in the cross machine direction of the material 20; and z is the cell 22, 24 size in vertical thickness direction of the material 20. The cell sizes are measured by optical microscope or scanning electron microscope (SEM); which are observed at least two sliced faces - in the x/z plane and y/z plane, and are characterized by image analysis program. The average cell 22,24 size, c is calculated by:

$$c = (x + y + z)/3$$

Figs. 2 and 3 illustrate a rigid foam plastic material 20 made in accordance with the present invention in which the cell orientation ratio in the x/z direction is altered from 1.0. As will be shown, the change in cell orientation ratio in the x/z direction results in new and unique properties for the rigid foam plastic materials 20.

Fig. 2 shows a rigid foam plastic material 20 having rigid foam cells 22, 24 made according to one preferred embodiment of the present invention. Here, the cell orientation ratio in the x/z direction is increased above 1.0 to between approximately 1.03 and 2.0 while still maintaining a low cell anisotropic ratio between 0.97 and 0.6. Materials 20 made in accordance with Fig. 2 exhibit enhanced thermal insulation R-value, decreased thermal conductivity *k*, and decreased aged thermal conductivity without an increase in the amount of polymeric material per unit measure and without a substantial decrease in compressive strength.

In Fig. 3, the cell orientation in the x/z direction is decreased to between approximately 0.5 and 0.97 while maintaining an anistropic ratio of between 1.6 and 1.03. Materials 20 made in accordance with Fig. 3 exhibit decreased thermal insulation R-value, increased thermal conductivity *k*, and increased aged thermal conductivity without an increase in the amount of polymeric material per unit measure. However, these materials 20 attain an increase in compressive strength.

The composition of the cell struts 26 and cell walls 28 of Figs. 2 and 3 may be any such polymer materials suitable to make polymer foams. These include polyolefins, polyvinylchloride, polycarbonates, polyetherimides, polyamides, polyesters, polyvinylidene chloride, polymethylmethacrylate, polyurethanes, polyurea, phenolformaldehyde, polyisocyanurates, phenolics, copolymers and terpolymers of the foregoing, thermoplastic polymer blends, rubber modified polymers, and the like. Also included are suitable polyolefins include polyethylene and polypropylene, and ethylene copolymers. Preferably, these thermoplastic polymers have weight-average molecular weights from about 30,000 to about 500,000.

A preferred thermoplastic polymer comprises an alkenyl aromatic polymer material. Suitable alkenyl aromatic polymer materials include alkenyl aromatic homopolymers and copolymers of alkenyl aromatic compounds and copolymerizable ethylenically unsaturated comonomers. The alkenyl aromatic polymer material may further include minor proportions of non-alkenyl aromatic polymers. The alkenyl aromatic polymer material may be comprised solely of one or more alkenyl aromatic homopolymers, one or more alkenyl aromatic copolymers, a blend of one or more of each of alkenyl aromatic homopolymers and copolymers, or blends of any of the foregoing with a non-alkenyl aromatic polymer.

Suitable alkenyl aromatic polymers include those derived from alkenyl aromatic compounds such as styrene, alphamethylstyrene, paramethylstyrene, ethylstyrene, vinyl benzene, vinyl toluene, chlorostyrene, and bromostyrene. A preferred alkenyl aromatic polymer is polystyrene. Minor amounts of monoethylenically unsaturated compounds such as $C_{2-6}$ alkyl acids and esters, ionomeric derivatives, and $C_{4-6}$ dienes may be copolymerized with alkenyl aromatic compounds. Examples of copolymerizable compounds include acrylic acid, methacrylic acid, ethacrylic acid, maleic acid, itaconic acid, acrylonitrile, maleic anhydride, methyl acrylate, ethyl acrylate, isobutyl acrylate, n-butyl acrylate, methyl methacrylate, vinyl acetate and butadiene.

Any suitable blowing agent may be used in the practice on this invention. Blowing agents useful in the practice of this invention include inorganic agents, organic blowing agents and chemical blowing agents. Suitable inorganic blowing agents include carbon dioxide, nitrogen, argon, water, air, nitrogen, and helium. Organic blowing agents include aliphatic hydrocarbons having 1-9 carbon atoms, aliphatic alcohols having 1-3 carbon atoms, and fully and partially halogenated aliphatic hydrocarbons having 1-4 carbon atoms. Aliphatic hydrocarbons include methane, ethane, propane, n-butane, isobutane, n-pentane, isopentane, and neopentane. Aliphatic alcohols include, methanol, ethanol, n-propanol, and isopropanol. Fully and partially halogenated aliphatic hydrocarbons include fluorocarbons, chlorocarbons, and chlorofluorocarbons. Examples of fluorocarbons include methyl fluoride, perfluoromethane, ethyl fluoride, 1,1-difluoroethane (HFC-152a), 1,1,1-trifluoroethane (HFC-143a), 1,1,1,2-tetrafluoro-ethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, and perfluorocyclobutane. Partially halogenated chlorocarbons and chlorofluorocarbons for use in this invention include methyl chloride, methylene chloride, ethyl chloride,1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoethane (HCFC-123) and 1-chloro-1,2,2,2-tetrafluoroethane (HCFC-124), and the like. Fully halogenated chlorofluorocarbons include trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. Chemical blowing agents include azodicarbonamide, azodiisobutyro-nitrile, benzenesulfonhydrazide, 4,4-oxybenzene sulfonyl-semicarbazide, p-toluene sulfonyl semi-carbazide, barium azodicarboxylate, and N,N'-dimethyl-N,N'-dinitrosoterephthalamide and trihydrazino triazine. In the present invention it is preferable to use 8 to 14% by weight based on the weight of the polymer HCFC-142b or 4 to 12% of HFC-134a with 0 to 3% ethanol. Alternatively 3 to 8% carbon dioxide with 0 to 4% lower alcohol, which include ethanol, methanol, propanol, isopropanol and butanol.

Optional additives which may be incorporated in the extruded foam product include additionally infrared attenuating agents, plasticizers, flame retardant chemicals, pigments, elastomers, extrusion aids, antioxidants, fillers, antistatic agents, UV absorbers, etc. These optional additives may be included in any amount to obtain desired characteristics of the foamable gel or resultant extruded foam products. Preferably, optional additives are added to the resin mixture but may be added in alternative ways to the extruded foam manufacture process.

Thus, for example, in the preferred embodiments having a structure as shown in Fig. 2 and 3 above, the rigid foam plastic material 20 is formed from a plasticized resin mixture of polystyrene having a weight-average molecular weight of about 250,000, an infrared attenuation agent such as special asphalt, a blowing agent, and other process additives such as a nucleation agent, flame retardant chemicals, and a nano-gas barrier additive.

The rigid foam plastic material 20 of Figs. 2 and 3 may be prepared by any means known in the art such as with an extruder, mixer, blender, or the like. The plasticized resin mixture, containing the thermoplastic polymer and preferably other additives, are heated to the melt mixing temperature and thoroughly mixed. The melt mixing temperature must be sufficient to plastify or melt the thermoplastic polymer. Therefore, the melt mixing temperature is at or above the glass transition temperature or melting point of the polymer. The melt mix temperature is from 200°C (392°F) to 280°C (536°F), most preferably about 220°C (428°F) to 240°C (464°F), depending on the amount of additives and the type of blowing agent used.

A blowing agent is then incorporated to form a foamable gel. The foamable gel is then cooled to a die melt temperature. The die melt temperature is typically cooler than the melt mix temperature, in the preferred embodiment, from 100°C (212°F) to about 150°C (302°F), and most preferably from about 110°C (230°F) to about 120°C (248°F). The die pressure must be sufficient to prevent prefoaming of the foamable gel which contains the blowing agent Prefoaming involves the undesirable premature foaming of the foamable gel before extrusion into a region of reduced pressure. Accordingly, the die pressure varies depending upon the identity and amount of blowing agent in the foamable gel. Preferably, in the preferred embodiment as shown in Figs. 2 and 3, the pressure is from 40 to 70 bars, most preferably around 50 bars. The expansion ratio, foam thickness per die gap, is in the range of 20 to 70, typically about 60,

To make the materials 20 of Fig. 2 having a cell orientation ratio in the x/z direction of between 1.03 and 2, the gap of the die lips and/or the shaper plates of the die are opened wider compared to those produced in the prior art as shown in Fig.1. This produces materials 20 having greater than desired thickness. The line speed, or takeaway speed, of the conveyor is then used to pull down the materials 20 to the desired thickness. As described above, materials 20 made in accordance with Fig. 2 exhibit enhanced thermal insulation R-value, decreased thermal conductivity $k$, and decreased aged thermal conductivity without an increase in the amount of polymeric material per unit measure and without a substantial decrease in compressive strength as compared with substantially round celled materials 20 as in Fig. 1.

Conversely, for materials 20 having a cell orientation ratio in the x/z direction between 0.97 and 0.6, the gap of the die lips and/or shaper plates of the die are closed and the conveyor line speed is decreased as compared to the prior art as shown in Fig. 1 to cause the cells 22, 24 to grow in the z-direction. As described above, materials made in accordance with Fig. 3 have enhanced compressive strength without a substantial decrease in thermal insulation R-value as compared with substantially round celled materials 20 as in Fig. 1.

Of course, as those of skill in the art recognize, other factors used may influence the cell orientation ratio in the x/z direction. For example, it is more difficult to influence smaller cells 22, 24 than it is to effect larger cells 22, 24. Thus, blowing agents that produce smaller cell sizes, such as carbon dioxide, may be more difficult to influence than blowing agents that produce larger cell sizes, such as HCFC-142b.

In another preferred embodiment, an extruded polystyrene polymer foam similar to the foam material 20 of Figs. 2 and 3 is prepared by twin-screw extruders (low shear) with flat die and plate shaper. A polystyrene pellet or bead is added into the extruder along with a nucleation agent, a fire retardant, and/or process agent by multi-feeders. Alternatively, a single screw tandem extruder (high shear) with radial die and a radial shaper may be used.

The following are examples of the present invention suited to the preferred embodiment as shown in Fig. 2, and are not to be construed as limiting.

Examples

The invention is further illustrated by the following examples in which all foam boards were 1.5 inches (38.1 millimeters) in thickness, and all R-values were 180 day aged R-value, unless otherwise indicated. In the following examples and control examples, rigid polystyrene foam boards were prepared by a twin screw co-rotating extruder with a flat die and shaper plate. Vacuum was applied in the extrusion processes for some examples.

Table 1, shows a summary of the process conditions for the twin-screw extruder. The polystyrene resins used were 70% polystyrene having a melt index of 3 and the 30% polystyrene, having a melt index of 18.8 (both from Deltech, with molecular weight, Mw about 250,000). The composite melt index was around 10.8 in compound. Stabilized hexabromocyclododecane (Great Lakes Chemical, HBCD SP-75) was used as flame retardant agent in the amount of 1% by the weight of the solid foam polymer.

TABLE 1

| KEY OPERATION PARAMETER | EXAMPLES |
|---|---|
| Wt. % of process additive | 0 to 6 |
| Wt. % of talc | 0-2 |
| Wt. % ofHC | 0 to 3 |
| Wt. % of HFC 134a | 0 to 6 |
| Wt. % of HCFC-142b | 0-12 |
| Wt. % of $CO_2$ | 0-5 |
| Extruder Pressure, Kpa (psi) | 13000-17000 (1950-2400) |
| Die Melt Temperature, °C | 117-123 |
| Die Pressure, Kpa (psi) | 5400- 6600 (790-950) |
| Line Speed, m/hr (ft/min) | 110-170(6-9.5) |
| Throughput, kg/hr | 100- 200 |
| Die Gap, mm | 0.4-1.8 |
| Vacuum KPa (inch Hg) | 0-4.25(0 to 20) |

The results of above examples, and a comparative example of the convention process with round cell structure shown in Table 2.

TABLE 2

| RUN NO. | AGED R-VALUE180 DAYS $KM^2$/W (F.$FT^2$.HR/ BTU)[a] | DENSITY KG/M3 (PCF) | CELL ANISOTROPIC RATIO | AVERAGE CELL MICRON | CELL ORIENTATION X/Z | VACUUM HG INCH | BLOWING AGENT[b] |
|---|---|---|---|---|---|---|---|
| 428-2 | 1.023 (5.81) | 32.48 (2.03) | 0.856 | 272 | 1.36 | 6 | 1 |
| 431-3 | 0.997 (5.66) | 32 (2) | 0.911 | 257 | 1.22 | 6.6 | 1 |
| 443-2 | 0.97 (5.51) | 27.52 (1.72) | 0.888 | 273 | 1.3 | 12 | 1 |
| 445-2 | 0.912 (5.18) | 27.36 (1.71) | 0.989 | 250 | 1.08 | 13.5 | 1 |
| 448-5 | 0.965 (5.48) | 24.32 (1.52) | 0.901 | 260 | 1.26 | 16.4 | 1 |
| 459-2 | 0.912 (5.13) | 23.36 (1.46) | 0.977 | 256 | 1.02 | 14 | 1 |

(continued)

| RUN NO. | AGED R-VALUE 180 DAYS KM²/W (F.FT².HR/BTU)[a] | DENSITY KG/M3 (PCF) | CELL ANISOTROPIC RATIO | AVERAGE CELL MICRON | CELL ORIENTATION X/Z | VACUUM HG INCH | BLOWING AGENT[b] |
|---|---|---|---|---|---|---|---|
| 509-8 | 0.895 (5.08) | 28.8 (1.8) | 0.888 | 252 | 1.21 | 12.6 | 2 |
| 498-2 | 0.852 (4.83) | 28.18 (1.76) | 0.982 | 177 | 1.06 | 13 | 2 |
| 191-2 | 0.743 (4.22) | 50.56 (3.16) | 1.095 | 279 | 0.79 | No | 3 |
| 183-4 | 0.696 (3.95) | 49.76 (3.11) | 1.215 | 224 | 0.6 | No | 3 |

Note: All specimens are 38 to 42 mm (around 1.5 inches) in thickness
[a] where, aged R-value is 40 days for carbon dioxide samples;
[b] Blowing Agent Compositions
1: HCFC 142 b 11 wt%;
2: HFC 134a 5.5 wt% and ethanol 3 wt%;
3: carbon dioxide 3.68 wt% and ethanol 1.4 wt%

More completed data treatments of these trials are shown on Fig. 4 is a graphical illustration from 52 trials showing the thermal insulation R-value vs. cell orientation of rigid foam board with several density levels, over a period of 180 days, HCFC 142 b blowing agent, 10.5 to 11.5 weight percentage of total solid was used, which shows an R-value increase of 6 to 12% by changing cell orientation from 0.9 to 1.3 for a foam board with 1.6 pcf ($25.63 \text{ kg/m}^3$) density.

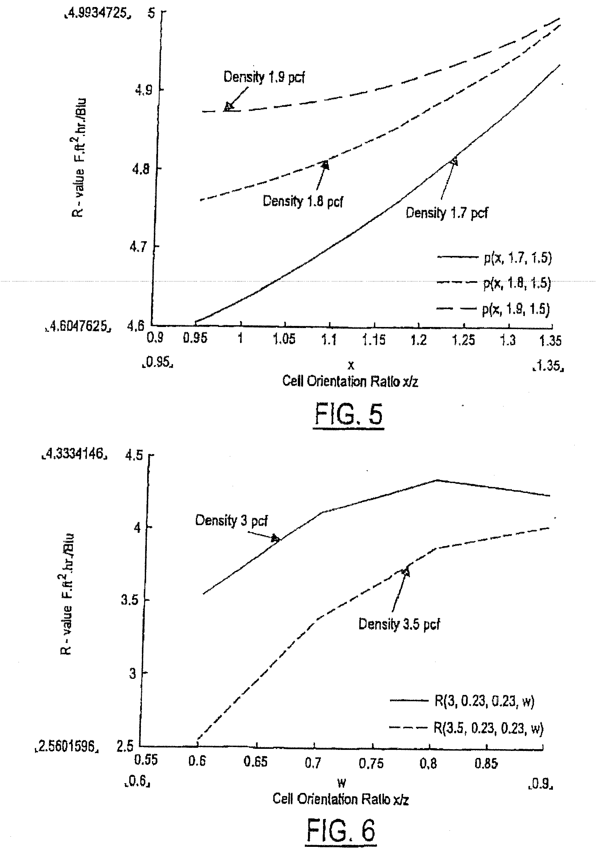

Fig. 5 is a graph, showing test results from 39 trials, related to R-value vs. cell orientation of polystyrene foam boards with several density levels, over a period of 180 days, HFC134a 5.5 wt% and ethanol 3 wt% were used as blowing agent for foaming these boards, which shows an R-value increase of 5 to 10% by changing cell orientation from 0.9 to 1.3 for a foam board with 1.6 pcf ($25.63 \text{ kg/m}^3$) density.

Fig. 6 is a graph, showing test results from 32 trials, related to R-value vs. the cell orientation of polystyrene foam boards with several density levels, over a period of 40 days at equilibrium of gas diffusion, carbon dioxide 3.68 wt % and ethanol 1.4 wt % were used as blowing agent, which shows an R-value increase of 4 to 8% by changing cell orientation from 0.7 to 0.9 for a foam board with 3 pcf ($48.06 \text{ kg/m}^3$) density.

Based on the test data from all these trials from a multi-variable regression calculation yields the R-value vs. Cell Orientation (or Cell Anisotropic Ratio) as shown in Figs. 4, 5 and 6, which shows an R-value increase of 3 to 12% by increase cell orientation 0.1 to 0.3 in comparison with projected R-values of same cell structure, without cell morphology change polymer foams with different foam densities.

Some further aspects of the invention can be found in the following paragraphs:

1. A polymeric foam material comprising a polymer having a weight average molecular weight of between approximately 30,000 and 500,000; and a blowing agent; wherein the cell orientation range of the polymeric foam material in the x/z direction is from approximately 0.5 to 0.97 and anisotropic ratio range is from 1.6 and 1.03.

2. The polymeric foam material of paragraph 1, further comprising one or more additives selected from the group consisting of infrared attenuating agents, plasticizers, flame retardant chemicals, pigments, elastomers, extrusion aids, antioxidants fillers, antistatic agents and UV absorbers.

3. The polymeric foam material of paragraph 1, wherein the polymer is a thermoplastic polymer.

4. The polymeric foam material of paragraph 3, wherein the polymer is an alkenyl aromatic polymer.

5. The polymeric foam material of paragraph 4, wherein the alkenyl aromatic polymer is polystyrene.

6. The polymeric foam of paragraph 1, wherein the blowing agents comprise HCFC's, HFC's, HC's, carbon dioxide, and other inert gases.

7. A polymeric foam material comprising a polymer having a weight average molecular weight of between approximately 30,000 and 500,000; and a blowing agent; wherein the cell orientation range of the polymeric foam material in the x/z direction is from approximately 1.03 to 2.0 and anisotropic ratio range is from 0.97 and 0.6.

8. The polymeric foam material of paragraph 7, further comprising one or more additives selected from the group consisting of infrared attenuating agents, plasticizers, flame retardant chomicals, pigments, elastomers, extrusion aids, antioxidants fillers, antistatic agents and UV absorbers.

9. The polymeric foam material of paragraph 8, wherein the polymer is a thermoplastic polymer.

10. The polymeric foam material of paragraph 9, wherein the polymer is an alkenyl aromatic polymer.

11. The polymeric foam material of paragraph 10, wherein the alkenyl aromatic polymer is polystyrene.

12. The polymeric foam of paragraph 7, wherein the blowing agents comprise HCFC's, HFC's, HC's, carbon dioxide, and other inert gases.

13. A method for enhancing thermal insulation R values of rigid polymer foams used in insulating products comprising increasing the cell orientation ratio in the x/z direction of the rigid polymer foam materials to between approximately 1.03 and 2.0.

14. The method of paragraph 13, wherein increasing the cell orientation ratio in the x/d direction of the rigid polymer foams comprises providing a device capable of producing the rigid polymer foam material; introducing a thermoplastic polymer resin to said device; heating said thermoplastic polymer resin above its glass transition temperature and melting point; incorporating one or more blowing agents into said thermoplastic polymer resin at a first pressure to form a gel, said first pressure sufficient to prevent pre-foaming of said gel; cooling said gel to a die melt temperature; and extruding the gel through a die gap of the device to a region of lower die pressure such that said gel grows quicker in an x-direction relative to a z-direction to form the polymer foam material, wherein said x-direction is defined as the extruded direction of the polymer foam material and wherein said z-direction is defined as the vertical thickness direction of the polymer foam material

15. The process of paragraph 14, wherein said device comprises an extruder, a mixer or a blender.

16. The process of paragraph 14, wherein the gel grows quicker in the x-direction relative to the z-direction by increasing the line pulling speed of the device through said die gap at a constant die gap thickness while maintaining a constant film density of the polymeric film material.

17. The process of paragraph 14, wherein the gel grows more quickly in the x-direction relative to a z-direction by increasing the die gap width at a constant line pulling speed of the device while maintaining a cell film density of the polymeric film material.

18. The process of paragraph 14, wherein introducing a thermoplastic polymer material to said device comprises introducing an alkenyl aromatic polymer to said device.

19. The process of paragraph 14, wherein incorporating one or more blowing agents comprises incorporating one or more blowing agents into said thermoplastic polymer resin at a first pressure to form a gel, said first pressure sufficient to prevent prefoaming of said gel, said one or more blowing agents comprising partially or fully hydrogenated HCFC's, HFC's, HC's, carbon dioxide, other inert gases, and mixtures thereof.

20. The process of paragraph 14, wherein introducing a thermoplastic polymer resin to said device comprises introducing a thermoplastic polymer resin to said device, said thermoplastic polymer resin having a weight average molecular weight of between approximately 30,000 and 500,000.

**Claims**

1. A rigid, foamed polymeric board comprising comprising:

   a polymer having a weight average molecular weight of between approximately 30,000 and 500,000; and
   a blowing agent; wherein the cell orientation ratio of the polymeric foam material in the x/z direction is from approximately 0.5 to 0.97 and the anisotropic ratio range is from 1.6 to 1.03.

2. A rigid, foamed polymeric board comprising:

   a polymer having a weight average molecular weight of between approximately 30,000 and 500,000; and
   a blowing agent; wherein the cell orientation ratio of the polymeric foam material in the x/z direction is from approximately 1.03 to 2.0 and the anisotropic ratio range is from 0.97 to 0.6.

3. The rigid, foamed polymeric board of claim 1 or claim 2, further comprising one or more additives selected from infrared attenuating agents, plasticizers, flame retardant chemicals, pigments, elastomers, extrusion aids, antioxidants fillers, antistatic agents and UV absorbers.

4. The rigid, foamed polymeric board of claim 1 or claim 2, wherein the polymer is a thermoplastic polymer.

5. The rigid, foamed polymeric board of claim 3, wherein the polymer is an alkenyl aromatic polymer.

6. The rigid, foamed polymeric board of claim 4, wherein the alkenyl aromatic polymer is polystyrene.

7. The rigid, foamed polymeric board claim 1 or claim 2, wherein the blowing agents consist essentially of an organic or chemical blowing agent, or mixtures thereof.

8. The rigid, foamed polymeric board claim 1 or claim 2, wherein the blowing agents comprise one or more of aliphatic hydrocarbons having 1-9 carbon atoms, aliphatic alcohols having 1-3 carbon atoms, and fully and partially halogenated aliphatic hydrocarbons having 1-4 carbon atoms

9. The rigid, foamed polymeric board claim 1 or claim 2, wherein the blowing agents comprise HCFC's, HFC's, HC's, carbon dioxide, and other inert gases.

10. The rigid, foamed polymeric board claim 1 or claim 2, wherein the polymeric board has thickness of 1.75 inch or less.

11. A method improving the material properties of a rigid polymeric foam board suitable for use in building construction, comprising increasing the cell orientation ratio in the x/z direction of the rigid polymer foams to between approximately 1.03 and 2.0.

12. The method of claim 11, wherein increasing the cell orientation ratio in the x/z direction of the rigid polymer foams comprises:

    providing a device capable of producing the rigid polymer foam material;
    introducing a thermoplastic polymer resin to said device;
    heating said thermoplastic polymer resin above its glass transition temperature and melting point;
    incorporating one or more blowing agents into said thermoplastic polymer resin at a first pressure to form a gel, said first pressure sufficient to prevent pre-foaming of said gel;
    cooling said gel to a die melt temperature; and
    extruding the gel through a die gap of the device to a region of lower die pressure such that said gel grows quicker in an x-direction relative to a z-direction to form the polymer foam material, wherein said x-direction is defined as the extruded direction of the polymer foam material and wherein said z-direction is defined as the vertical thickness direction of the polymer foam material.

13. The method of claim 12, wherein said device comprises an extruder, a mixer or a blender.

14. The method of claim 12 or claim 13, wherein the gel grows quicker in the x-direction relative to the z-direction by increasing the line pulling speed of the device through said die gap at a constant die gap thickness while maintaining a constant film density of the polymeric film material.

15. The method of claim 12 or claim 13, wherein the gel grows more quickly in the x-direction relative to a z-direction by increasing the die gap width at a constant line pulling speed of the device while maintaining a cell film density of the polymeric film material.

16. The method of any of claims 12 to 15, wherein introducing a thermoplastic polymer material to said device comprises introducing an alkenyl aromatic polymer to said device.

17. The method of any of claim 9 to 16, wherein incorporating one or more blowing agents comprises incorporating one or more blowing agents into said thermoplastic polymer resin at a first pressure to form a gel, said first pressure sufficient to prevent prefoaming of said gel, said one or more blowing agents comprising partially or fully hydrogenated HCFC's, HFC's, HC's, carbon dioxide, other inert gases, and mixtures thereof.

18. The method of any of claims 9 to 17, wherein introducing a thermoplastic polymer resin to said device comprises introducing a thermoplastic polymer resin having a weight average molecular weight of between approximately 30,000 and 500,000.

19. The method of claim 11 wherein the cell orientation ratio in the x/z direction of the regid polymeric foam board is between approximately 0.5 and 0.97.

FIG. 1    (PRIOR ART)

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5373026 A
- US 5604265 A
- EP 863175 A

**Non-patent literature cited in the description**

- The Thermal Conductivity of foamed Plastics. **Richard E. Skochdopol.** Chemical Engineering Progress. The Dow Chemical Co, vol. 57, 55-59
- **O.A. Almanza.** Prediction of the Radiation Term in the Thermal Conductivity of Crosslinked Closed Cell Polyolefin Foams. *J. of Polymer Science: Part B: Polymer Physics,* 2000, vol. 38, 993-1004

14